(19) Europäisches Patentamt / European Patent Office / Office européen des brevets

(11) **EP 2 131 270 A1**

(12) **EUROPEAN PATENT APPLICATION**
published in accordance with Art. 153(4) EPC

(43) Date of publication:
**09.12.2009 Bulletin 2009/50**

(51) Int Cl.:
*G06F 3/041* (2006.01)   *G06F 3/045* (2006.01)

(21) Application number: **08738958.1**

(86) International application number:
**PCT/JP2008/055791**

(22) Date of filing: **26.03.2008**

(87) International publication number:
**WO 2008/117838 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007080838**

(71) Applicant: **Kyocera Corporation
Kyoto-shi
Kyoto 612-8501 (JP)**

(72) Inventors:
• **NOZAWA, Junichi
Kirishima-shi
Kagoshima 899-5195 (JP)**
• **TSUCHIDA, Katsumi
Kirishima-shi
Kagoshima 899-5195 (JP)**

(74) Representative: **HOFFMANN EITLE
Patent- und Rechtsanwälte
Arabellastrasse 4
81925 München (DE)**

(54) **TOUCH PANEL AND TOUCH PANEL TYPE DISPLAY DEVICE**

(57)    The present invention relates to a touch panel (X) including: a first base (10) having a first resistance film (12); a second base (20) having a second resistance film (22) and a inter-base connector electrode (23); and a conductive adhesive member (30) for electrically connecting the first resistance film (12) and the inter-base connector electrode (23). The first and the second bases (10) and (20) are adhered so that the first and the second resistance films (12) and (22) face each other. The conductive adhesive member (30) contains a first particle (31) having conductivity and a second particle (32) having a diameter smaller than that of the first particle (31). The second particle (32) has a lower deformation ratio or an lower aspect ratio than the first particle (31), or has a larger compression deformation modulus than the first particle (31).

FIG.3

EP 2 131 270 A1

**Description**

TECHNICAL FIELD

The present invention relates to a touch panel disposed on a display screen of, for example, a liquid crystal display. The present invention further relates to a touch panel type display apparatus.

BACKGROUND ART

There is a touch panel type display apparatus in which, for example, a touch panel for detecting input coordinates by a resistance change caused by pressing operation is disposed in a liquid crystal display apparatus (refer to, for example, Patent Document 1).

A touch panel in the touch panel type display apparatus disclosed in the Patent Document 1 has a configuration that a second substrate made of glass is disposed so as to face a first substrate made by a polyethylene terephthalate film. In the first substrate, on the face opposite to the second substrate, a first resistance film made of ITO (Indium Tin Oxide) and a wiring electrode electrically connected to the first resistance film are provided. In the second substrate, on the face opposite to the first substrate, a second resistance film made of INTO and an inter-base connector electrode electrically connected to the second resistance film are provided. The wiring electrode of the first substrate and the inter-base connector electrode of the second substrate are electrically connected to each other via a conductive adhesion member. The conductive adhesion member is made of an adhesive material and a conductive particle buried in the adhesive material. The conductive particle is obtained by plating the surface of a plastic particle with metal (gold, nickel, or the like).

Patent document 1: Japanese Patent Application Laid-Open No. 2002-41231

DISCLOSURE OF THE INVENTION

PROBLEM TO BE SOLVED BY THE INVENTION

However, in the touch panel of the touch panel type display apparatus, to make contact resistance in the conductive particle more uniform, the conductive particle is pressed with a press force acting thereon at the time of forming a gap between the first and second substrates to increase the contact area between the conductive particle and the wiring electrode or the inter-substrate connector electrode. Consequently, there is a case that variations occur in the gap between the first and second substrates depending on the pressed degree of the conductive particle.

An object of the present invention is to reduce occurrence of variations in the gap between substrates while sufficiently assuring a contact area between a conductive particle and a wiring electrode in a touch panel.

MEANS FOR SOLVING PROBLEM

A touch panel according to one aspect of the present invention includes: a first base having a first resistance film; a second base having a second resistance film and an inter-base connector electrode; and a conductive adhesive member electrically connecting the first resistance film and the inter-base connector electrode. The first and the second bases are adhered via the conductive adhesive member so that the first and the second resistance films face each other.

The conductive adhesive member includes a first particle having conductivity and a second particle having diameter that is smaller than that of the first particle.

The deformation ratio (compression ratio) or the aspect ratio of the second particle is lower than that of the first particle, or the compression elastic modulus of the second particle is larger than that of the first particle.

The deformation ratio (compression ratio) denotes the ratio of deformation (compression) before and after the force acts. The aspect ratio denotes a value obtained by dividing the long axis of a particle by the short axis of the particle. The compression elastic modulus denotes a so-called 10%K value.

According to another aspect of the present invention, a touch panel type display apparatus, includes a display panel and the above-described touch panel. In the touch panel, a main face of the first or second base faces a main face of the display panel.

ADVANTAGE OF THE INVENTION

In an example according to the touch panel of the present invention, a conductive adhesive member includes a first particle having conductive property and a second particle having the deformation ratio (compression ratio) and the diameter smaller than those of the first particle. Consequently, in the touch panel, when the pressure force acts between the first and second bases in order to set the gap between the first and second bases in a predetermined range, deformation of the first particle is regulated by the second particle. That is, in the touch panel, the second particle having the deformation ratio (compression ratio) lower than that of the first particle exists, so that occurrence of variations in the gap between the first and second bases is suppressed. Besides, in the touch panel, the diameter of the first particle is larger than that of the second particle. Therefore, even if deformation of the first particle is regulated by the second particle, the first particle can be sufficiently deformed prior to the regulation. Since the first particle has conduction property, the contact area between the first resistance film or the inter-base connector electrode and the first particle can be sufficiently assured if the first particle can be sufficiently deformed. Such action and advantage can be similarly obtained also in the case where the aspect ratio of the second particle is lower than that of the first particle or the case where the compressive elastic modulus of the second particle is larger than that of the first particle.

Since the touch panel type display apparatus of the present invention has the above-described touch panel of the invention, it can enjoy the advantage of the above-described touch panel. That is, in the touch panel type panel display apparatus, while sufficiently assuring the contact area between the first particle (conductive particle) and the inter-base connector electrode and the like, occurrence of variations in the gap between the first and second bases can be reduced.

BRIEF DESCRIPTION OF DRAWINGS

FIG. 1 is an exploded perspective view illustrating a schematic configuration of an example of a touch panel according to an embodiment of the present invention.

FIG. 2 is a cross-sectional view corresponding to a section taken along line II-II of FIG. 1 in a state where the touch panel is assembled.

FIG. 3 is a cross-sectional view corresponding to a section taken along line III-III of FIG. 1 in a state where the touch panel is assembled.

FIG. 4 is a cross-sectional view corresponding to a section taken along line IV-IV of FIG. 1 in a state where the touch panel is assembled.

FIG. 5 is a cross-sectional view for explaining a series of processes at the time of bonding first and second bases of the touch panel illustrated in FIG. 1.

FIG. 6 is a cross-sectional view expressing a schematic configuration of a touch panel type display apparatus, having the touch panel illustrated in FIG. 1.

FIG. 7 is a perspective view expressing a schematic configuration of a liquid crystal display panel of a liquid crystal display apparatus in the touch panel type display apparatus illustrated in FIG. 6.

FIG. 8 is a cross-sectional view illustrating an enlarged main part of the liquid crystal display panel illustrated in FIG. 7.

EXPLANATIONS OF LETTERS OR NUMERALS

| X | Touch panel |
| Y | Touch panel type display apparatus |
| 10 | First base |
| 12 | First resistance film |
| 20 | Second base |
| 22 | Second resistance film |
| 23, 24 | Inter-substrate connector electrodes |
| 30 | Conductive adhesive member |
| 31 | First particle |
| 32 | Second particle |

BEST MODE(S) FOR CARRYING OUT THE INVENTION

A touch panel and a touch panel type display apparatus related to an embodiment of the present invention will be described below with reference to the drawings.

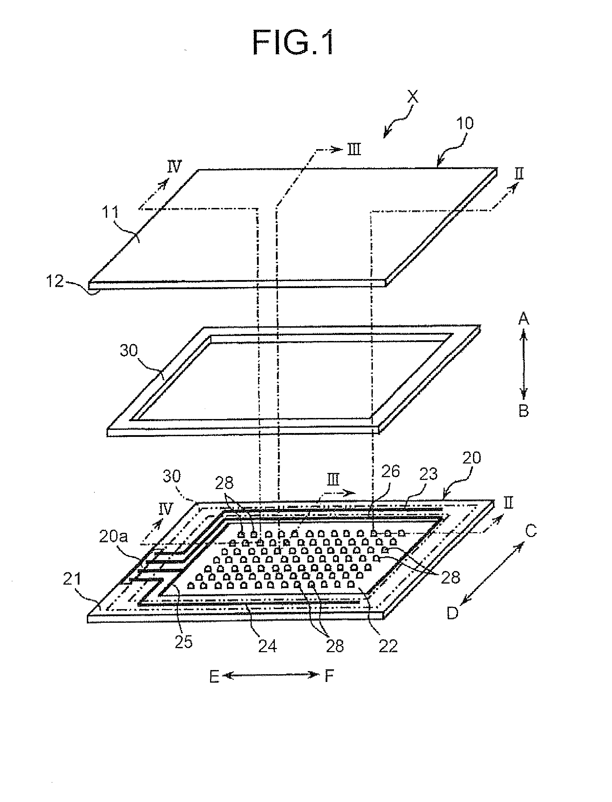

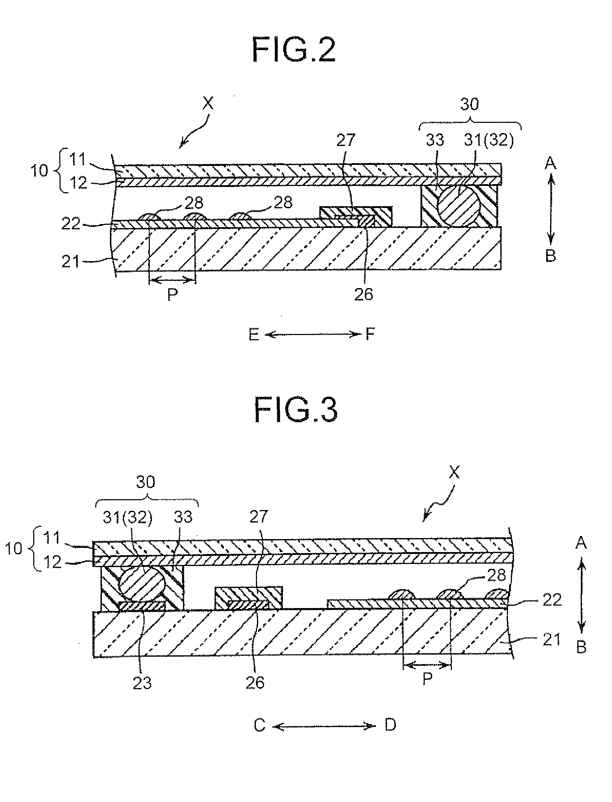

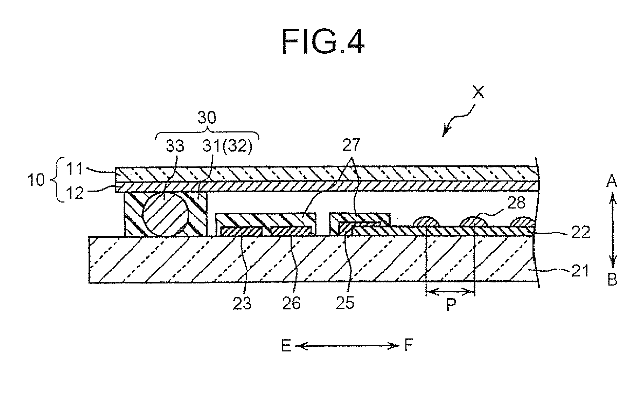

As illustrated in FIGS. 1 to 4, a touch panel X has a first base 10, a second base 20, and a conductive adhesive member 30.

The first base 10 has flexibility as a whole and has an almost rectangular shape in plan view. The shape in plan view of the first base 10 is not limited to an almost rectangular shape but may be other shape. The first base 10 has an insulating substrate 11 and a first resistance film 12.

The insulting substrate 11 is a member playing the role of supporting the first resistance film 12, and has translucency and electric insulation to the direction (for example, AB direction) crossing the main face of the insulating substrate 11. The translucency denotes transmission of visible light. The material of the insulating substrate 11 is, for example, glass, translucent plastic, or the like. In particular, from the viewpoint of heat resistance property, glass is preferable as the material of the insulating substrate 11. In the case of employing glass as the material of the insulating substrate 11, preferably, the thickness of the insulating substrate 11 is set within the range of greater than or equal to 0.1 mm to less than or equal to 0.3 mm in order to assure sufficient shape stability and flexibility.

The first resistance film 12 contributes to detection of potential at the contact point with a second resistance film 22 of the second base 20 which will be described later and has translucency to a direction (for example, AB direction) crossing the main face of the first resistance film 12. The first resistance film 12 is formed so as to spread in almost the entire main face positioned on the side of the B direction of the insulating substrate 11 by the conductive material having predetermined electric resistance. The resistance value of the first resistance film 12 is, for example, in the range of greater than or equal to 200 $\Omega/\square$ to less than or equal to 1500 $\Omega/\square$. In the embodiment, the thickness of the first resistance film 12 is set to $2.0\times10^{-2}$ $\mu$m or less from the viewpoint of increasing resistance. The first resistance film 12 has translucency at least in the arrow A direction in the diagram. The material of the first resistance film 12 is, for example, a translucent conductive member such as ITO (Indium Tin Oxide), ATO (Antimony trioxide), tin oxide, or zinc oxide.

The second base 20 has an almost rectangular shape in plan view and is disposed so as to face the first base 10. The shape in plan view of the second base 20 is not limited to an almost rectangular shape but may be other shape. The second base 20 has an insulating substrate 21, the second resistance film 22, inter-substrate connector electrodes 23 and 24, wiring electrodes 25 and 26, an insulating layer 27, and a spacer 28. The second base 20 has an external conduction region 20a as a region to be connected to a not-illustrated FPC (Flexible Printed Circuit) or the like. In the external conduction region 20a, one ends of the inter-substrate connector electrodes 23 and 24 and the wiring electrodes 25 and 26 are positioned.

The insulating substrate 21 plays the role of supporting the second resistance film 22, the inter-substrate connector electrodes 23 and 24, the wiring electrodes 25 and 26, the insulating layer 27, and the plurality of spacers 28, and has translucency and electric insulation to the direction (for example, AB direction) crossing the main face of the insulating substrate 21. The material of the insulating substrate 21 is, for example, glass, translucent plastic, or the like. In particular, from the viewpoint of heat resistance property, glass is preferable as the material of the insulating substrate 21. In the case of employing glass as the material of the insulating substrate 21, preferably, the thickness of the insulating substrate 11 is set to 0.7 mm or larger in order to assure sufficient shape stability.

The second resistance film 22 contributes to detection of potential at the contact point with the first resistance film 12 of the first base 10 and has translucency to a direction (for example, AB direction) crossing the main face of the second resistance film 22. The second resistance film 22 is formed in a region excluding the periphery of the main face positioned on the side of the A direction of the insulating substrate 21 by the conductive material having predetermined electric resistance (the region in which the first resistance film 12 is formed in plan view). The translucency and the electric resistance value required for the second resistance film 22 are similar to those for the first resistance film 12. The material of the second resistance film 22 is similar to that of the first resistance film 12.

The inter-substrate connector electrodes 23 and 24 play the role of applying a voltage to the first resistance film 12 via the conductive adhesive member 30 which will be described later and is formed around the second resistance film 22. One end of the inter-substrate connector electrode 23 is positioned in the external conduction region 20a, and the other end is positioned in an end region on the side of the arrow C direction in an adhesive region (the region surrounded by an alternate long and two short dashes line in FIG. 1) of the conductive adhesive member 30 which will be described later in the insulating substrate 21. One end of the inter-substrate connector electrode 24 is positioned in the external conduction region 20a, and the other end is positioned in an end region on the side of the arrow D direction in the adhesive region of the conductive adhesion member 30.

The resistance value between both ends of the inter-substrate connector electrodes 23 and 24 is preferably set to be 0.01 time or less of the resistance value between both ends of the first resistance film 12 from the viewpoint of detection precision of the touch panel X. The inter-substrate connector electrodes 23 and 24 are made by, for example, a metal thin film (line width of greater than or equal to 0.5 mm to less than or equal to 2 mm and thickness of greater than or equal to 0.5 $\mu$m to less than or equal to 2 $\mu$m) from the viewpoint of hardness and shape stability. The metal thin film includes, for example, an aluminum film, an aluminum alloy film, or a multilayer film of chromium and aluminum. In the case of forming the first resistance film 12 by ITO, the metal thin film is preferably constructed by a multilayer film of chromium and aluminum (chromium is disposed between ITO and aluminum). Examples of the method of forming the metal thin film include sputtering, vapor deposition, and chemical vapor deposition (CVD).

When the inter-base connector electrodes 23 and 24 are formed by the metal thin film, by forming the metal thin film by a normal thin film forming method, improvement in hardness and stabilisation of the shape can be achieved.

Consequently, in the touch panel X, the degree of cut (formation of recesses) in the inter-base connector electrodes 23 and 24, of first and second particles 31 and 32 in the conductive adhesive member 30 which will be described later can be reduced. Therefore, in the touch panel X, variations in the gap between the first and second bases 10 and 20 can be reduced, and decrease in the contact area caused by formation of recesses in the inter-base connector electrodes 23 and 24 can be prevented.

By forming the metal thin film by an aluminum film, an aluminum alloy film, or a multilayer film of a chromium film and an aluminum film, easiness of thin film formation and easiness of thin film processing (patterning or the like) can be also increased. In addition, the wiring resistance can be made relatively low.

The wiring electrodes 25 and 26 play the role of applying voltage to the second resistance film 22. One end of the wiring electrode 25 is positioned in the external conduction region 20a, and the other end is positioned in an end region on the side of the arrow E direction in the second resistance film 22. One end of the wiring electrode 26 is positioned in the external conduction region 20a, and the other end is connected to the end on the side of the arrow F direction in the second resistance film 22.

The resistance value between both ends of the wiring electrodes 25 and 26 is preferably set to be 0.01 time or less of the resistance value between both ends of the second resistance film 22 from the viewpoint of detection precision of the touch panel X. The wiring electrodes 25 and 26 are made by, for example, a metal thin film (line width of greater than or equal to 0.5 mm to less than or equal to 2 mm and thickness of greater than or equal to 0.5 $\mu$m to less than or equal to 2 $\mu$m) in a manner similar to the inter-substrate connector electrodes 23 and 24. As a metal thin film, the metal thin film constructing the inter-substrate connector electrodes 23 and 24 can be used.

The insulating layer 27 plays the role of reducing occurrence of unnecessary electric contact between the inter-substrate connector electrodes 23 and 24 or the wiring electrodes 25 and 26 and the first resistance film 12. The insulating layer 27 is formed so as to cover a predetermined region other than the region positioned in the adhesive region in the conductive adhesive member 30 and the external conduction region 20a in the inter-substrate connector electrodes 23 and 24. The insulating layer 27 is also formed so as to cover the predetermined region other than the region positioned in the external conduction region 20a in the wiring electrodes 25 and 26. The material of the insulating layer 27 is a thermo-setting resin such as a polyester-based resin, an ultraviolet curable resin such as an acrylic resin, or the like. Among the resins, as the material of the insulating layer 27, a thermo-setting resin is preferable from the viewpoint of the work efficiency in the manufacture process. The thickness of the insulating layer 27 is preferably 10 $\mu$m or less from the viewpoint of flatness of the touch panel X. In FIG. 1, from the viewpoint of easier reading of the drawing, the insulating layer 27 is not illustrated.

In the case of making the first and second resistance films 12 and 22 come into contact in a predetermined position (in the case of entering information), the spacer 28 plays the role of suppressing unnecessary contact between the first and second resistance films 12 and 22 in a region other than the predetermined position. The spacer 28 is constructed by a plurality of dot-shaped spacers. The plurality of dot-shaped spacers are disposed in a matrix at almost constant cycles in the CD direction and the EF direction on the second resistance film 22. Preferably, the dot-shaped spacers constructing the spacer 28 are uneasily visually recognized while playing the function of preventing unnecessary contact between the first and second resistance films 12 and 22, and each dot-shaped spacer has, for example, a hemisphere shape having a diameter of 40 $\mu$m or less and a height of greater than or equal to 1.0 $\mu$m to less than or equal to 3.5 $\mu$m. The apart distance P between neighboring dot-shaped spacers in the CD direction or the EF direction is, for example, greater than or equal to 2 mm to less than or equal to 4 mm. Such a spacer 28 can be formed, for example, by screen printing, offset printing, or photolithography using an ultraviolet curable resin or thermo-setting resin such as acrylic resin or epoxy resin.

The conductive adhesive member 30 plays the role of joining the first and second bases 10 and 20 while making the first resistance film 12 and the inter-substrate connector electrodes 23 and 24 electrically conductive. The conductive adhesive member 30 is in contact with the first base 10 in the periphery of the first resistance film 12 and, on the other hand, in contact with the second base 20 in the inter-base connector electrode 23 so as to surround the second resistance film 22. The conductive adhesive member 30 contains the first particle 31, the second particle 32, and an adhesive material 33.

By disposing the conductive adhesive member 30 so as to surround the region where the second resistance film 22 is formed and to be disposed in the region where the first resistance film 12 is formed in the plan view (view in the AB direction), current can be passed only to the first resistance film 12 via the conductive adhesive member 30, and mixture of a foreign matter or the like into the regions facing the formation region of the first resistance film 12 and the formation region of the second resistance film 22 can be reduced. The disposition shape of the conductive adhesive member 30 is not limited to the frame surrounding the second resistance film 22 but can be variously changed.

By making the conductive adhesive member 30 come into direct contact with the first resistance film 12 and the inter-base connector electrode 23, occurrence of variations in the gap between the first resistance film 12 and the inter-base connector electrode 23 and, moreover, in the gap between the first and second bases 10 and 20, becomes less.

The first particle 31 plays the role of electrically connecting the first resistance film 12 and the inter-substrate connector electrode 23 and at least a part of it is buried in the conductive adhesive member 30. The shape of the first particle 31 is an almost spherical shape from the viewpoint of reducing a damage on the first resistance film 12, the inter-substrate connector electrode 23, and the like which are in contact with the first particle 31. The shape of the first particle 31, however, is not limited to an almost spherical shape but may be, for example, a polyhedral shape. It is sufficient for The first particle 31 to have conductivity at least on the surface. For example, a particle obtained by covering the surface of a spherical insulting member such as a plastic ball with a conductive material (for example, gold or nickel) is employed.

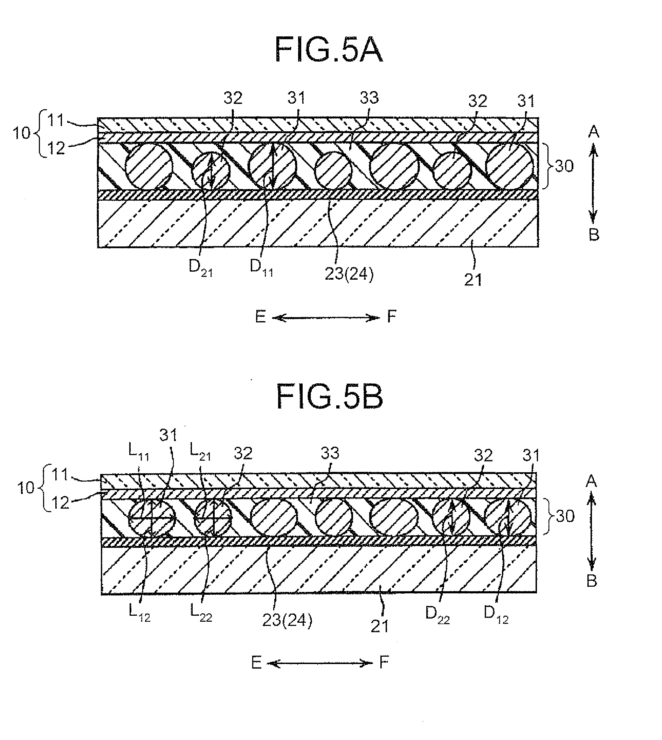

A particle diameter $D_{11}$ (refer to FIG. 5A) in the AB direction prior to deformation (compression) of the first particle 31 in the embodiment is larger than a particle diameter $D_{21}$ (refer to FIG. 5A) of the second particle 32 in the AB direction prior to deformation (compression), and the first particle 31 is compressed more than the second particle 32. The particle diameter $D_{11}$ (refer to FIG. 5A) prior to compression of the first particle 31 is set to, for example, greater than or equal to 2 $\mu$m to less than or equal to 25 $\mu$m, and a particle diameter $D_{12}$ (refer to FIG. 5B) after compression of the first particle 31 is set to, for example, greater than or equal to 1.5 $\mu$m to less than or equal to 24 $\mu$m. The particle diameter $D_{11}$ prior to compression of the first particle 31 is not limited to the above-described range but may be in a range where the first particle 31 itself is not excessively deformed while assuring a sufficient area of contact with the first resistance film 12 or the inter-substrate connector electrode 23.

As described above, the first particle 31 is compressed more than the second particle 32. That is, deformation ratio (compression ratio) $D_1$ defined in the following mathematical expression 1 and aspect ratio $L_1$ defined in the following mathematical expression 2 of the first particle 31 are higher than deformation ratio (compression ratio) $D_2$ (refer to mathematical expression 3) and aspect ratio $L_2$ (refer to mathematical expression 4) of the second particle 32 which will be described later. The deformation ratio (compression ratio) $D_1$ of the first particle 31 is set to, for example, 0.03 to 0.3, and the aspect ratio $L_1$ of the first particle 31 is set to, for example, 1.03 to 3.

$$[\text{Expression 1}]$$

$$D_1 = (D_{11} - D_{12}) / D_{11}$$

$D_1$: deformation ratio (compression ratio) of first particle
$D_{11}$: particle diameter in the AB direction of first particle before compression
$D_{12}$: particle diameter in the AB direction of first particle after compression

$$[\text{Expression 2}]$$

$$L_1 = L_{11} / L_{12}$$

$L_{11}$: dimension in the long-axis direction (dimension in the EF direction in FIG. 5B)
$L_{12}$: dimension in the short-axis direction (dimension in the AB direction in FIG. 5B)

The second particle 32 contributes to specify the apart distance between the first and second bases 10 and 20 and at least a part of which is buried in the conductive adhesive member 30. The shape of the second particle 32 is an almost spherical shape for a similar reason as that of the first particle 31. The shape of the second particle 32, however, is not limited to an almost spherical shape but may be, for example, a polyhedral shape. As the second particle 32, from the viewpoint of easiness of specifying the apart distance between the first and second bases 10 and 20, a silica sphere (a spherical particle made of mainly silica dioxide) is employed. As the second particle 32, another material such as glass fiber may be employed.

A particle diameter $D_{21}$ (refer to FIG. 5A) in the AB before compression of the second particle 32 in the embodiment is smaller than the particle diameter $D_{11}$ (refer to FIG. 5A) of the first particle 31 before compression, and the degree of compression of the second particle 32 is lower (hardly compressed) than that of the first particle 31. Each of the particle diameters $D_{21}$ and $D_{22}$ (refer to FIG. 5A) before/after compression of the second particle 32 is set to, for example, greater than or equal to 1.5 $\mu$m to less than or equal to 24 $\mu$m. Each of the particle diameters $D_{21}$ and $D_{22}$ before/after compression of the second particle 32 is not limited to the above-described range but may be set in a range for the purpose of the apart distance between the first and second bases 10 and 20.

Further, deformation ratio (compression ratio) $D_2$ defined as the following mathematical expression 3 and aspect ratio $L_2$ defined as the following mathematical expression 4 of the second particle 32 are lower than deformation ratio (compression ratio) $D_1$ (refer to the above mathematical expression 1) and the aspect ratio $L_1$ (refer to the above mathematical expression 2) of the first particle 31. The deformation ratio (compression ratio) $D_2$ of the second particle 32 is set to, for example, greater than or equal to 0 to less than or equal to 0.01, and the aspect ratio $L_2$ of the second particle 32 is set to, for example, greater than or equal to 1 to less than or equal to 1.01.

[Expression 3]

$$D_2 = (D_{21} - D_{22}) / D_{21}$$

$D_2$: compression deformation ratio of second particle
$D_{21}$: particle diameter in the AB direction of second particle before compression
$D_{22}$: particle diameter in the AB direction of second particle after compression

[Expression 4]

$$L_2 = L_{21} / L_{22}$$

$L_{21}$: dimension in the long-axis direction (dimension in the EF direction in FIG. 5B)
$L_{22}$: dimension in the short-axis direction (dimension in the AB direction in FIG. 5B)

The adhesive material 33 contributes to joining of the first and second bases 10 and 20 and the first and second particles 31 and 32 are mixed. Examples of the adhesive material 33 are a thermo-setting resin such as an epoxy-based resin and an ultraviolet curable resin such as an acrylic resin. In particular, as the adhesive material 33, it is preferable to use a thermo-setting resin from the viewpoint of work efficiency in the manufacture process.

Next, an example of a method of adhering the first and second bases 10 and 20 by the conductive adhesive member 30 will be described.

As the conductive adhesive member 30, a member obtained by mixing the first and second particles 31 and 32 in the adhesive material 33 in an uncured state is used. In the following description, it is assumed that a thermo-setting resin is employed as the adhesive material 33. As the first particle 31, a particle which is obtained by covering the surface of an insulation sphere such as a plastic sphere with a conductive material and can be relatively easily deformed is employed. As the second particle, a particle which is relatively difficult to be deformed such as a silica sphere is employed. That is, in the case of comparing the first and second particles 31 and 32, the compressive elastic modulus of the second particle 32 is higher than that of the first particle 31. As the first particle 31, for example, a particle having a compressive elastic modulus of greater than or equal to 300 kgf/mm$^2$ (about $2.9 \times 10^3$ MPa) to less than or equal to 600 kgf/mm$^2$ (about $5.9 \times 10^3$ MPa). As the second particle 32, for example, a particle having a compressive elastic modulus of greater than or equal to 1500 kgf/mm$^2$ (about $1.5 \times 10^4$ MPa) MPa to less than or equal to 25000 kgf/mm$^2$ (about $2.5 \times 10^5$ MPa) MPa is employed.

The compressive elastic modulus of each of the first and second particles 31 and 32 means so-called 10%K value which is defined by the following mathematical expression 5.

[Expression 5]

$$10\%K \text{ value} = (3/2^{1/2}) \cdot F \cdot S^{-3/2} \cdot R^{-1/2}$$

F: load value (Kgf) in 10% compression deformation of particle
S: compression displacement (mm) in 10% compression deformation of particle
R: radius (mm) of particle

F, S, and R at the 10%K value can be obtained by compressing microparticles corresponding to the first and second particles 31 and 32 by using a micro compression testing machine ("PCT-200" manufactured by Shimadzu Corporation) at room temperature. The microparticles corresponding to the first and second particles 31 and 32 are compressed, for example, in a smooth end face of a cylindrical column having a diameter of 50 $\mu$m and made of diamond at a compression speed of 0.27 gf/second and a maximum test weight of 10 gf.

At the time of adhering the first and second bases 10 and 20, first, the conductive adhesive member 30 is printed (coated) on a predetermined region in the top face (the formation face of the inter-substrate connector electrodes 23 and 24) of the second base 20. The predetermined region in the embodiment is, as well shown in FIG. 1, a region (region surrounded by the alternate long and two short dashes line) positioned so as to surround the second resistance film 22.

Next, as shown in FIG. 5A, the first base 10 is aligned with the second base 20 on which the conductive adhesive member 30 is printed, and the first and second bases 10 and 20 are adhered to each other via the conductive adhesive member 30, thereby manufacturing an adhered structure.

As illustrated in FIG. 5B, the first and second bases 10 and 20 in the manufactured structure are pressurized in the directions of making the first and second bases 10 and 20 come closer to each other. The pressurization in the embodiment is performed until the second particles 32 come into contact with both of the first and second bases 10 and 20 while deforming the first particles 31 by the first and second bases 10 and 20 so that the deformation ratio (compression ratio) $D_1$ (refer to mathematical expression 1) or aspect ratio $L_1$ (refer to mathematical expression 1) of the first particles 31 becomes higher.

Next, while maintaining a pressurized state, the conductive adhesive member 30 is heated to cure temperature of the adhesive material 33 to cure the adhesive material 33. By the heating, the adhesive material 33 cures and the first and second bases 10 and 20 are adhered to each other.

In the touch panel X, the conductive adhesive member 30 includes the first particle 31 having conductive property and the second particle 32 having the deformation ratio (compression ratio) and the diameter smaller than those of the first particle 31. Consequently, even when the pressure force is made act between the first and second bases 10 and 20 in order to set the gap between the first and second bases 10 and 20 in a predetermined range, deformation of the first particle 31 is regulated by the second particle 32. That is, in the touch panel X, the second particles 32 which are less easily deformed than the first particles 31 exist, so that occurrence of variations in the gap between the first and second bases 10 and 20 is suppressed. In addition, in the touch panel X, the diameter of the first particle 31 is larger than that of the second particle 32. Therefore, even if deformation of the first particle 31 is regulated by the second particle 32, the first particle 31 can be sufficiently deformed prior to the regulation, and the contact area between the first resistance film 12 and the inter-base connector electrode 23 and the first particle 31 can be sufficiently assured. Such action and effect can be similarly obtained also in the case where the aspect ratio $L_2$ of the second particle 32 is lower than the aspect ratio $L_1$ of the first particle 31 or the case where the compressive elastic modulus of the second particle 32 is larger than that of the first particle 31.

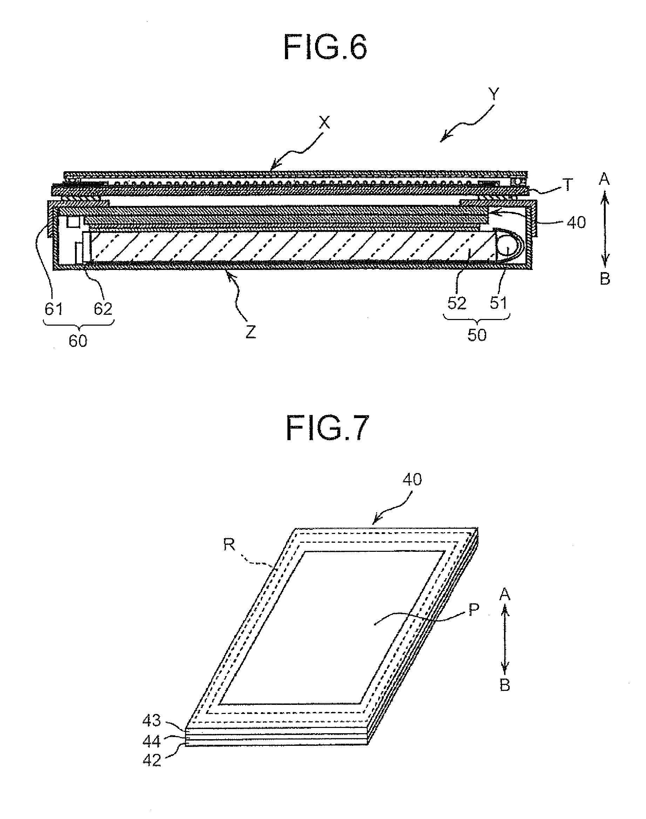

Next, an example of the touch panel type display apparatus according to the present invention will be described with reference to FIGS. 6 to 8.

As illustrated in FIGS. 6 to 8, a display apparatus Y with a touch panel is constructed by the touch panel X and a liquid crystal display apparatus Z.

The touch panel X has been described with reference to FIGS. 1 to 5. Therefore, in FIG. 6, the same reference numerals are designated to elements similar to those of FIGS. 1 to 5.

The liquid crystal display apparatus Z has a liquid crystal display panel 40, a backlight 50, and a casing 60.

The liquid crystal display panel 40 has a liquid crystal layer 41, a first base 42, a second base 43, and a sealing member 44. The liquid crystal display panel 40 has a display region P including a plurality of pixels for displaying an image. The display region P is specified by interposing the liquid crystal layer 41 between the first and second bases 42 and 43 and sealing the liquid crystal layer 41 by the stealing member 44.

The liquid crystal layer 41 is a layer including liquid crystal expressing electric, optical, mechanical, or magnetic anisotropy and having both regularity of a solid and flowability of a liquid. Examples of such liquid crystal include nematic liquid crystal, cholesteric liquid crystal, and smectic liquid crystal. In the liquid crystal layer 41, a spacer (not illustrated) made of, for example, a number of particulate members may be interposed to maintain the thickness of the liquid crystal layer 41 constant.

The first base 42 includes a transparent substrate 421, a light shield film 422, a color filter 423, a planarization film 424, a transparent electrode 425, and an alignment film 426.

The transparent substrate 421 plays the role of supporting the light shield film 422 and the color filter 423 and sealing the liquid crystal layer 41. The transparent substrate 421 can properly transmit light in a direction crossing the main face of the transparent substrate 421 (for example, AB direction). Examples of the material of the transparent substrate 421 include, for example, glass and translucent plastic.

The light shield film 422 plays the role of blocking light (setting the light transmission amount to a predetermined value or less), and is formed on the top face of the transparent substrate 421. The light shield film 422 has through holes 422a penetrating the film in the film thickness direction (AB direction) to transmit light. Examples of the material of the light shield film 422 include a resin (such as acrylic resin) in which a dye or pigment of a color having high light shield property (for example, black) and carbon are added, and Cr.

The color filter 423 plays the role of selectively absorbing a predetermined wavelength in light incident on the color filter 423 and selectively transmitting only the predetermined wavelength. Examples of the color filter 423 include a red color filter (R) for selectively transmitting wavelength of red visible light, a green color filter (G) for selectively transmitting wavelength of green visible light, and a blue color filter (B) for selectively transmitting wavelength of blue visible light. The color filter 423 is constructed by, for example, adding a dye or pigment to an acrylic resin.

A planarization film 242 plays the role of flattening roughness caused by disposing the color filters 423 and the like. The material of the planarization film 424 is, for example, a transparent resin such as an acrylic resin.

The transparent electrode 425 plays the role of applying a predetermined voltage to the liquid crystal in the liquid crystal layer 41 positioned between itself and a transparent electrode 432 of the second base 43 which will be described later, and transmits light entering from one side to the other side. The transparent electrode 425 plays the role of transmitting a predetermined signal (image signal). The plurality of transparent electrodes 425 are arranged so as to extend mainly in the CD direction. The material of the transparent electrode 425 is a translucent conductive member such as ITO and tin oxide.

The alignment film 426 plays the role of aligning liquid crystal molecules of the liquid crystal layer 41 macroscopically oriented at random directions (having low regularity) into a predetermined direction, and is formed on the transparent electrode 425. The material of the alignment film 426 is a polyimide resin or the like.

The second base 43 has a transparent substrate 431, the transparent electrode 432, and an alignment film 433.

The transparent substrate 431 is a member contributing to support of the transparent electrode 432 and the alignment film 433 and sealing of the liquid crystal layer 41. The transparent substrate 431 can properly transmit light in a direction (AB direction) crossing the main face of the transparent substrate 431. The material of the transparent substrate 431 is similar to that of the insulating substrate 421.

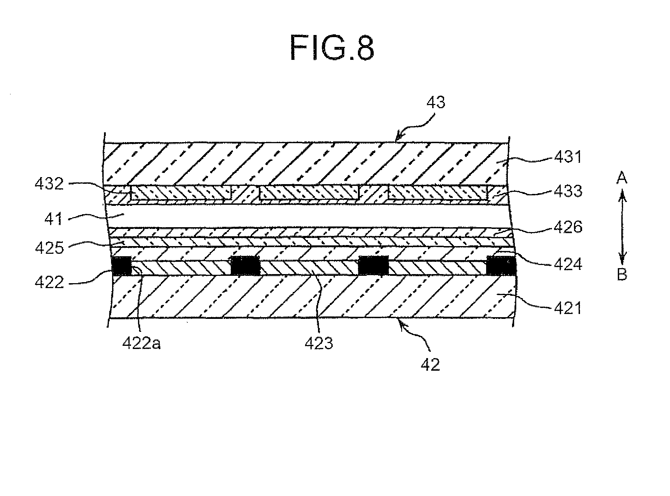

The transparent electrode 432 plays the role of applying a predetermined voltage to the liquid crystal of the liquid crystal layer 41 positioned between the transparent electrode 432 and the transparent electrode 425 of the first base 42 and transmits light entering from one side to the other side. The transparent electrode 432 plays the role of transmitting a signal (scan signal) for controlling a state (ON) of voltage application to the liquid crystal layer 41 or a state (OFF) of no application of voltage. The plurality of transparent electrodes 432 are disposed so as to extend in the direction perpendicular to the face of FIG. 8. The material of the transparent electrode 432 is similar to that of the transparent electrode 425.

The alignment film 433 plays the role of aligning liquid crystal molecules of the liquid crystal layer 41 macroscopically oriented at random directions (having low regularity) into a predetermined direction, and is formed on the transparent electrode 432. The material of the alignment film 433 is similar to that of the alignment film 426.

The sealing member 44 plays the role of sealing the liquid crystal layer 41 between the first and second bases 42 and 43 and joining the first and second bases 42 and 43 in a state where they are apart from each other with a predetermined gap. The sealing member 44 is, for example, an insulating resin or a sealing resin.

The backlight 50 plays the role of emitting light from one side of the liquid crystal display panel X to the other side, and employs an edge lit configuration. The backlight 50 has a light source 51 and a light guide plate 52. The light source 51 plays the role of emitting light toward the light guide plate 52 and is disposed on a side of the light guide plate 52. Examples of the light source include a CFL (Cathode Fluorescent Lamp), an LED (Light Emitting Diode), a halogen lamp, a xenon lamp, and an EL (Electro-luminescence). The light guide plate 52 plays the role of almost uniformly guiding light from the light source 51 to the entire bottom face of the liquid crystal display panel 40. The light guide plate 52 normally includes a reflection sheet, a diffusion sheet, and a prism sheet. The reflection sheet (not illustrated) plays the role of reflecting light and is provided on the rear side. The diffusion sheet (not illustrated) plays the role of diffusing light to make light more uniform plane light and is provided on the surface. The prism sheet (not illustrated) plays the role of condensing light in an almost predetermine direction and is provided on the surface. Examples of the material of the light guide plate 52 include transparent resins such as an acrylic resin and a polycarbonate resin. The backlight 50 is not limited to the edge lit configuration in which the light source 51 is disposed on side face of the light guide plate 52 but may employ another configuration such as the array lit configuration in which the light source 51 is disposed on the back side of the liquid crystal display panel 40.

The casing 60 plays the role of housing the liquid crystal display panel 40 and the backlight 50 and includes an upper casing 61 and a lower casing 62. Examples of the material of the casing 60 include a resin such as a polycarbonate resin and metals such as stainless steel (SUS) and aluminum.

Next, an example of a method of fixing the touch panel X and the liquid crystal display apparatus Z by a double-stick tape T will be described. A fixing member for use in the method of fixing the touch panel X and the liquid crystal display apparatus Z is not limited to the double-stick tape T. For example, an adhesive member such as a thermo-setting resin and an ultraviolet curable resin may be employed or a fixing structure of physically fixing the touch panel X and the liquid crystal display apparatus Z may be employed.

First, one side of the double-stick tape T is adhered to a predetermined region in the top face of the upper casing 61 of the liquid crystal display apparatus Z. In the embodiment, the predetermined region is, as well expressed in FIG. 7, a region R positioned so as to surround the display region P of the liquid crystal display apparatus Z.

Subsequently, the touch panel X is aligned with the liquid crystal display apparatus Z to which the double-sided tape T is adhered, and the insulating substrate 21 of the touch panel X and the upper casing 61 of the liquid crystal display apparatus Z are adhered to each other via the double-sided tape T. In such a manner, the touch panel X and the liquid crystal display apparatus Z are fixed to each other.

Since the display apparatus Y with a touch panel has the touch panel X, it can enjoy effects similar to those of the above-described touch panel X. That is, in the display apparatus Y with a touch panel, while sufficiently assuring the contact area between the first particle 31 and the inter-base connector electrode 23 and the like, occurrence of variations in the gap between the first and second bases 10 and 20 can be reduced.

Although the concrete embodiment of the invention has been described above, the invention is not limited to the embodiment but can be variously changed without departing from the ideas of the invention.

The touch panel X is not limited to the configuration that the first particle 31 is in the direct contact with the first resistance film 12. For example, the first particle 31 and the first resistance film 12 may be electrically connected to each other via a wiring similar to the inter-substrate connector electrode 23 formed on the insulating substrate 11.

In the touch panel X, a phase difference film may be further disposed on at least one of the first and second bases 10 and 20. The phase difference film is an optical compensation film for converting linearly-polarized light to be converted to an elliptical polarization state by birefringence (shift of the phase) of the liquid crystal from the elliptical polarization state to a linearly polarized state. Examples of the material of the phase difference film include polycarbonate (PC), polyvinyl alcohol (PVA), polyarylate (PA), polysulfone (Psu), and polyolefin (PO). In particular, as the material of the phase difference film, from the viewpoint of consistency with wavelength dispersion of the liquid crystal, PC is preferred. From the viewpoint of adaptability to a circularly polarizing plate, PO having a photoelastic coefficient smaller than that of a PC is preferred. Such a configuration is suitable to increase the contrast ratio of a display image.

In the touch panel X, a polarizing film may be further disposed for at least one of the first and second bases 10 and 20. The polarizing film plays the role of selectively transmitting light in a predetermined vibration direction. The material of the polarizing film is an iodine-based material or the like. Such a configuration is suitable to display the function of shuttering light which passes through the polarizing film.

In the touch panel X, a film subjected to anti-glare process or antireflection coat process may be also disposed for at least one of the first and second bases 10 and 20. With such a configuration, external light reflection can be reduced.

Each of the insulating substrates 11 and 21 of the touch panel X may be replaced with any of a phase difference film, a polarizing film, or a film subjected to the anti-glare process or antireflection coat process.

In the touch panel X, the conductive adhesive member 30 is formed so as to surround the entire second resistance film 22 by a single coating work. However, the invention is not limited to the formation. For example, the conductive adhesive member 30 may be formed as a member having a communication hole for communicating the inside of the conductive adhesive member 30 and the outside of the conductive adhesive member 30. In such a case, after adhering the first and second bases 10 and 20 by applying the conductive adhesive member 30, air or the like can be injected into the inside of the conductive adhesive member 30 via the communication hole. After injection of air or the like, the communication hole can be sealed by using the material similar to that of the conductive adhesive member 30 or a nonconductive adhesive member (such as ultraviolet curable resin).

In the configuration having the insulating layer 27 as in the embodiment, the formation position of the communication hole is not limited. On the other hand, in a configuration which does not have the insulating layer 27, to suppress occurrence of unnecessary electric conduction, it is preferable to employ a configuration of forming a communication hole in a region where the conductive adhesive member and lead parts of wires cross and sealing the communication hole by using a nonconductive adhesive member (such as an ultraviolet curable resin).

## Claims

1. A touch panel comprising:

> a first base having a first resistance film;
> a second base having a second resistance film and an inter-base connector electrode; and
> a conductive adhesive member electrically connecting the first resistance film and the inter-base connector electrode, the first and the second bases being adhered via the conductive adhesive member so that the first and the second resistance films face each other, wherein
> the conductive adhesive member includes a first particle having conductivity and a second particle having a lower deformation ratio than the first particle, and
a diameter of the first particle is larger than that of the second particle.

2. A touch panel comprising:

   a first base having a first resistance film;
   a second base having a second resistance film and a inter-base connector electrode; and
   a conductive adhesive member electrically connecting the first resistance film and the inter-base connector electrode, the first and second bases being adhered via the conductive adhesive member so that the first and second resistance films face each other, wherein
   the conductive adhesive member contains a first particle having conductivity and a second particle having an aspect ratio lower than that of the first particle, and
   diameter of the first particle is larger than that of the second particle.

3. A touch panel comprising:

   a first base having a first resistance film;
   a second base having a second resistance film and a inter-base connector electrode; and
   a conductive adhesive member electrically connecting the first resistance film and the inter-base connector electrode, the first and second bases being adhered via the conductive adhesive member so that the first and second resistance films face each other, wherein
   the conductive adhesive member contains a first particle having conductivity and a second particle having a compression elastic modulus larger than that of the first particle, and
   a diameter of the first particle is larger than that of the second particle.

4. The touch panel according to any one of claims 1 to 3, wherein the second particle has insulation property.

5. The touch panel according to any one of claims 1 to 3, wherein the conductive adhesive member is in direct contact with the first resistance film and the inter-base connector electrode.

6. The touch panel according to any one of claims 1 to 3, wherein the conductive adhesive member is disposed in a region where the first resistance film is formed so as to surround a region where the second resistance film is formed, in plan view.

7. The touch panel according to any one of claims 1 to 3, wherein an adhesive component of the conductive adhesive member is a thermo-setting resin.

8. The touch panel according to any one of claims 1 to 3, wherein the inter-base connector electrode is made by a metal thin film.

9. The touch panel according to claim 8, wherein the metal thin film is one of an aluminum film, an aluminum alloy film, and a multilayer film of a chromium film and an aluminum film.

10. A touch panel type display apparatus, comprising a display panel and the touch panel according to any one of claims 1 to 3, wherein a main face of the first or the second base faces a main face of the display panel.

# FIG.1

# FIG.2

# FIG.3

# FIG.4

# FIG.5A

# FIG.5B

# FIG.6

# FIG.7

# FIG.8

# EP 2 131 270 A1

<table>
<tr><td colspan="2" style="text-align:center"><strong>INTERNATIONAL SEARCH REPORT</strong></td><td>International application No.<br>PCT/JP2008/055791</td></tr>
</table>

**A. CLASSIFICATION OF SUBJECT MATTER**
*G06F3/041(2006.01)i, G06F3/045(2006.01)i*

According to International Patent Classification (IPC) or to both national classification and IPC

**B. FIELDS SEARCHED**

Minimum documentation searched (classification system followed by classification symbols)
G06F3/03-3/047, G02F1/133-1/1334, 1/1339-1/1368

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-41231 A  (Hitachi, Ltd.),<br>08 February, 2002 (08.02.02),<br>Full text; all drawings<br>& US 2001/0043291 A1 | 1-10 |
| Y | JP 2005-309152 A  (Seiko Epson Corp.),<br>04 November, 2005 (04.11.05),<br>Full text; Figs. 8 to 9<br>(Family: none) | 1-10 |
| Y | JP 2000-338498 A  (NEC Corp.),<br>08 December, 2000 (08.12.00),<br>Full text; all drawings<br>& US 6486936 B1 | 1-10 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 May, 2008 (19.05.08) | Date of mailing of the international search report<br>27 May, 2008 (27.05.08) |
|---|---|
| Name and mailing address of the ISA/<br>Japanese Patent Office | Authorized officer |
| Facsimile No. | Telephone No. |

Form PCT/ISA/210 (second sheet) (April 2007)

18

**EP 2 131 270 A1**

**REFERENCES CITED IN THE DESCRIPTION**

**Patent documents cited in the description**

- JP 2002041231 A